# EUROPEAN PATENT APPLICATION

(11) **EP 4 506 319 A1**
(43) Date of publication of application: **12.02.2025**
(21) Application number: 24193777.0
(22) Date of filing: 09.08.2024
(51) Int. Cl.: C04B 28/00, C04B 18/12

(54) **LOW ENVIRONMENTAL IMPACT CONCRETE INCLUDING A GEOPOLYMER BINDER AND QUARRY DEBRIS AS AGGREGATES**

(30) Priority: 11.08.2023 IT 202300017232
(71) Applicant: ReHouseit Srl Società Benefit, 20123 Milan (IT)
(72) Inventor: Verardi, Nicolò, 20123 Milan (IT); Vernazza, Edoardo, 20123 Milan (IT)
(74) Representative: Di Bernardo, Antonio

(57) **Abstract**

The present invention concerns a low environmental impact concrete including a geopolymer binder and quarry debris as aggregates. A method for preparing such a concrete is also described.

## Description

### TECHNICAL FIELD

The present invention relates to a low environmental impact concrete including a geopolymer binder and quarry debris as aggregates. The invention also relates to a method for preparing such a concrete.

### BACKGROUND

Concrete is the most widely used construction material in the world due to its versatility. However, the essential ingredient of concrete is cement (CEM), which is not considered an environmentally friendly material and consumes natural raw materials such as limestone and gypsum. The production of CEM not only uses a considerable amount of energy, but also emits a considerable amount of carbon dioxide (CO₂) and other greenhouse gases.

Geopolymer concrete, an inorganic polymer concrete, has emerged as a low-cost and more environmentally friendly substitute for CEM-based concrete, with good properties such as high compressive strength, good flexural strength, superior acid resistance and low shrinkage.

Geopolymer binds fine aggregates (sand) and coarse aggregates (gravel) together to form geopolymer concrete.

Geopolymer is the product formed by the reaction between a source of silica and alumina (aluminosilicates) and an alkaline solution that creates the conditions for the geopolymerisation process at room temperature. Easy-to-use alkaline reagents, such as sodium or potassium silicates, are useful in geopolymerisation.

Geopolymers are inorganic materials invented in 1976 by the French scientist Davidovits. ("Solid-Phase Synthesis of a Mineral Blockpolymer by Low Temperature Polycondensation of Alumino-Silicate Polymers: Na-poly(sialate) or Na-PS and Characteristics" Joseph DAVIDOVITS, IUPAC Symposium on Long-Term Properties of Polymers and Polymeric Materials, Stockholm 1976, Topic III).

These geopolymer materials are currently used as slurries to replace cements as construction materials, to make composite materials consisting of a geopolymer matrix in which organic or inorganic fibres are dispersed in an orderly manner, and as primary components in surface coatings with good mechanical, thermal insulation, acid-proofing and, above all, fire resistance characteristics.

The studies and applications on the market use few waste materials as alternative ingredients to cement on which the binder is based. "Fly ash" is almost always used, but it will be produced in quantities that are constantly decreasing due to the closure of coal-fired power plants on European soil.

There are also studies in which attempts have been made to replace natural aggregates with aggregates of different types, mostly very different from natural sand and gravel, but belonging to a wide variety of sectors, such as glass recycling and waste limestone or rubber from recycled tyres.

A recent study (Sundis M.S. Taher et al., Case Studies in Construction Materials, 2021, Vol.15, p.e00744), focused on understanding the behaviour of deep geopolymer concrete beams made from glass or limestone waste instead of fine aggregates. Sand was replaced with these waste materials in four different replacement ratios, namely 0%, 5%, 10% and 15%. The mechanical properties of geopolymer concrete were measured after curing for 7 and 28 days. In addition, the performance of deep geopolymer concrete beams with the fine aggregate made of waste was studied in terms of compressive strength, maximum compressive strain and initial modulus of elasticity. A comparison study was carried out between the waste aggregate used as a substitute for fine aggregate in geopolymer concrete and the deep beams made from it. The conclusions of this study were as follows:
1. The introduction of waste limestone and glass aggregates into geopolymer concrete decreases its compressive and tensile strength.
2. In geopolymer concrete beams with waste limestone, the maximum load is reduced within a range of 7 to 25% by increasing the content of waste aggregate from 5 to 15% to replace sand.
3. From the load-deflection behaviour, deep beams with waste glass aggregate showed a 30% lower load capacity than beams without waste aggregate when replacing 5-15% sand with this waste.

Another study (Yeonho Park et al., Construction & building materials, 2016, Vol.118, p.43-51) focuses on investigating the parameters that significantly influence the mechanical properties of geopolymer concrete, based on high and low calcium fly ash (C and F classes that are rich in silicon and aluminium), in which recycled tyre rubber was used to partially replace sand (fine aggregates), with a volume range of 0 to 20% by volume. The following conclusions can be drawn from this study:
a) The compressive strength of the geopolymer concrete cylinder decreases with increasing recycled rubber content. Regardless of the type of fly ash, the concentration of the sodium hydroxide solution or the ratio of the alkaline activator, the addition of recycled rubber decreases the compressive strength of the geopolymer concrete.
b) The type of fly ash and the ratio of sodium silicate (Na₂SiO₃) to sodium hydroxide (NaOH) as a mixed activator lead to a significant reduction in compressive strength.
c) An appropriate amount of rubber can be replaced with an equal volume of fine aggregates in the geopolymer concrete without a significant reduction in compressive strength. A replacement level range of 10 to 15% is necessary to ensure that the average compressive strength is statistically reduced by the change in volume.

In any case, the approach adopted in the previous studies, using that type of waste instead of sand, is to be considered as downcycling the waste or production by-product, i.e. to convert it into a new material with a lower value. One example is the reuse of shredded glass not as a secondary raw material to produce new glass containers, but included as a simple aggregate in an alternative concrete.

Aggregates are those natural materials used in the construction industry to assemble ballast, road embankments, gravity dams or to be mixed with tar, cement and other binders. Sources of aggregates, usually mined in open quarries, are various types of rocks.

The grain size of aggregates is linked to many aspects of workability and setting of the mixes, stability, durability and the physical-mechanical characteristics (e.g. friction resistance) of the artefact.

The best grain size is the one that produces a product with the best packing. This is achieved with particle sizes in which the finer portions fill the voids created by the juxtaposition of the coarser particles while leaving the necessary space for the binder. There is therefore a need for a concrete that is more sustainable than the standard concrete obtained using Portland cement or other types (CEM II, III, IV, V), but which possesses comparable or better mechanical properties and resistance to fire and acids than standard concrete.

Patent application US 2011/271876 discloses a geopolymer composition comprising: blast furnace slag; bauxite (calcined or uncalcined), alumina slag or tailings, or powdered alumina oxide; dry sodium or potassium silicate or silicate premixed with water to produce a suspension of solids; a dry base, or premixed with water; a fluidizer; water; calcite; and a quarried, crushed and/or ground stone, e.g. Cotswold stone. For the preparation of the geopolymer described, stone fragments smaller than approximately 500 µm and fragments with a size of approximately 6 mm are used.

Saxena Rajat et al. (Environment, Development and Sustainability, 23, pp. 17810-17834, 2021) reported on a study focusing on the effective reuse of granite waste in the preparation of fly ash-based geopolymer concrete. The granite waste was reused as a fractional replacement of natural fine aggregates (sand) in proportions ranging from 0 to 20% by weight in an incremental order of 5%.

Ehud Cohen et al. (Journal of Cleaner Production, 235, pp. 910-919, 2019) investigated the effects of adding dolomite-based quarry dust (QD) waste material as a filler in CEM-I and FA-based geopolymer blends. This study shows that unused QD can be integrated with high replacement rates (up to 40% by weight) in both CEM-I and FA-based systems, showing an improvement in their engineering properties. The QD used for the study had an average particle size of 90 µm.

Patent application JP 2021/008396 mentions a geopolymer composition containing a base material component (A), a water-soluble cellulose ether (B) and an anionic surfactant (C), where the base material component (A) is coal and/or blast furnace ash.

### OBJECTS AND SUMMARY OF THE INVENTION

It is a first object of the present invention to provide an low environmental impact construction material (or rather concrete) based on geopolymer binders and natural aggregates derived from cutting materials (i.e. quarry debris), designed and developed to currently emit up to 80% less CO₂ than standard concrete. It is also an object of the present invention to provide a concrete with, for the same exposure class and consistency, a compressive strength equal to that of conventional concrete, but more resistant to acid attack and fire.

In addition to the binder, concrete is composed of inert aggregates. With a view to a material with a low environmental impact, at the basis of which there is a binder with a low environmental impact, it is unavoidable not to also have an aggregate that is not specially extracted from the quarry, but is the result of material that has already been generated, i.e. debris from previous extractions.

Aggregates are divided into categories according to their size: "coarse" or "fine". Coarse aggregates have particle sizes larger than 4.75 mm, generally comprised between 9.5 mm and 37.5 mm in diameter. Fine aggregates are usually sand or crushed stone with a particle diameter less than 9.55 mm.

In the present invention, both the fine part (the sand in concrete) and the coarse part (the gravel in concrete) consist of natural aggregates derived from cutting materials (i.e. debris) from ornamental stone quarries, preferably from the same quarry (same material and same place). In fact, after careful technical evaluation, the inventors noted that during the production of blocks and slabs in quarries extracting materials for ornamental purposes (e.g. Carrara marble), a by-product of the cutting materials is produced, which, if appropriately screened, is an excellent substitute for both sand and gravel as an aggregate in the concrete of the present invention.

Derivatives of cutting materials are, for example, defined in Regional Law No. 35 of 25 March 2015 of the Tuscany Region (R.L. 35/2015 Tuscany, Art.2), and are indicated to be material coming from the quarrying of materials for ornamental use, to which it is connected by dislocation and contiguity, not suitable for the production of blocks, slabs and similar, listels, as well as waste material from the squaring and cutting carried out in the quarry.

While not wishing to be bound by any theory, the Applicant believes that the derivatives of cutting materials coming from ornamental stone quarries, which constitute the aggregate portion within the finished product of the invention, cannot be considered as inert materials, but by appropriately considering their mineralogical composition and exploiting the chemical processes occurring during the setting of the geopolymer binder, they can be considered as participating in the chemical reaction during the setting phase, even if only in part.

This would represent an upcycling approach, as products of higher quality and value can be obtained from this material (natural aggregates derived from ornamental stone quarries). Therefore, this approach is not the recycling of waste, but "creative reuse", which gives a new and more valuable life to the materials used.

In addition, at morphological level, a structure was found that was already known, but had never before been chemically exploited. Minerals, such as Carrara marble for example, are in fact metamorphic rocks, i.e. they show a reorganisation of the minerals after being exposed to high pressures and high temperatures, which also results in the formation of amorphous parts, which react optimally in this case with the binder of the present invention during the geopolymerisation reaction, characterising these minerals no longer as inert, but as an integral part of the reaction. More specifically, after their generation, these derivatives of cutting materials do not require any washing or drying treatment before being used as aggregates in the concrete of the present invention.

Minerals such as granites and basalts also react optimally during the geopolymerisation reaction. In fact, although they are not metamorphic but magmatic rocks, they have amorphous parts. More specifically, even these derivatives of the cutting materials after their generation do not require any washing or drying treatment before being used as aggregates in the concrete of the present invention.

According to a first aspect, the present invention is directed to a concrete comprising a geopolymer binder and natural aggregates derived from ornamental stone quarries, in which more than 60% by weight of the aggregates (relative to the total weight of the aggregates) have a diameter of more than 5 mm.

Data obtained as a result of experimental tests have shown that the concrete of the present invention constitutes a construction material with a low environmental impact, designed and developed to emit up to 80% less CO₂ than standard concrete at present, and endowed, with the same exposure class and consistency, with a compressive strength equal to that of conventional concrete, but more resistant to acid attack and fire.

Further features and objects of the present invention will be more evident from the following description.

The geopolymer is the reaction product of an amorphous aluminous silica source, which is called the precursor (powder), and an alkaline liquid that creates the conditions for the geopolymerisation process to take place at the appropriate temperature (liquid). Therefore, the geopolymer binder comprises an amorphous aluminous silica source, which is called the precursor (or reactive powder), and an alkaline liquid, which is called the reagent.

According to an aspect of the invention in the reactive powder or precursor: the molar ratio of Si to Al is preferably greater than 2; Fe₂O₃ is preferably present in a percentage less than 40% m/m (i.e. the mass of Fe₂O₃ is less than 40% of the mass of the precursor); CaO is preferably present in a percentage less than 30% m/m (i.e. the mass of Ca₂O is less than 30% of the mass of the precursor). If necessary, it is preferable to calcine the powders to make them reactive by removing chemically bound water by baking them at temperatures below 800 °C. Furthermore, according to another aspect of the invention, a ratio of more than 1 is preferable between the moles of Na or K present in the liquid silicate (alkaline liquid) and the moles of Al present in the reactive powder or precursor.

Generally in a preferred aspect of the invention the temperature is room temperature, but a person skilled in the art can easily increase or decrease the temperature in order to accelerate or reduce the time of the geopolymerisation process.

In the formulation according to the present invention, the amorphous aluminous silica reactive powder comprises metakaolin, F-type coal fly ash, microsilica and/or steel mill recyclates.

The "coal fly ash" according to the present invention belongs to class F according to ASTM C618 and is the residue from the combustion of bituminous or anthracite coals. It consists essentially of reactive SiO₂ (silica) and Al₂O₃ (alumina). It is in the form of a very fine powder with pozzolanic activity.

The "metakaolin" according to the present invention, has formula (Al₂O₃-2SiO₂), and is obtained by thermal activation of kaolinite clay at about 750°C.

The "microsilica" is a by-product of the electric arc furnace production industry of silicon metal and ferro-silicon alloys.

The "steel mill recyclates" according to the present invention can be dust from the metal smelting process (blast furnace slag)

Dust from steel production in electric arc furnaces (known as "black slag") can also be used.

The "ornamental rocks" according to the present invention are both metamorphic rocks, i.e., rocks that originate as a result of "metamorphic processes", i.e., both mineralogical and structural transformations that the rock minerals undergo when they are placed in environments with pressure, temperature and chemistry conditions that differ from those that led to their formation; but also rocks of the magmatic type that contain amorphous minerals as a result of solidification processes.

The main metamorphic and magmatic rocks used in Italy as ornamental stones include the following:
a) marbles: rocks consisting of crystalline calcite and often variously coloured due to the presence of oxide pigments and sulphides; among the best-known marbles are those from Tuscany (e.g. Carrara marble), Bianco Lasa from Trentino and Candoglia marble;
b) gneiss: rocks that derive from dynamothermal metamorphism of both sedimentary and granitic rocks and are particularly widespread in orogenic areas; they have a quartzose-felspathic composition; the Beole and Serizzi rocks quarried in Val d'Ossola belong to this category;
c) quartzites, which are rocks consisting of 80% quartz and formed by metamorphism of quartz sandstones and siliceous rocks (jaspers); examples of this type of stone are the Green Quartzite of Spluga and the Quartzite of Barge;
d) green stones, which are a series of rocks derived from the metamorphism of basic and ultra-basic igneous rocks (serpentines, ophicalci, ecalgites, etc.); examples of this type of stone are the green ones of the Aosta Valley;
e) argillocrysts, which originate by metamorphism from the burial of pelitic rocks (clays); a well-known example of this type of stone is Ligurian slate;
f) granites: rocks of volcanic origin, they have a quartz content between 20 and 60%, while the remaining minerals are alkali feldspars, plagioclase and micas. White granite can be found in Sardinia, and pink granite in Baveno on Lake Maggiore;
g) basalts: effusive rocks of volcanic origin, composed of calcic plagioclase, pyroxenes and gabbro, can be found for example in the Berici Hills in Veneto or in the areas surrounding Etna.

The natural aggregates derived from cutting materials come from the scraps from the processing of ornamental stone quarries and are therefore not the primary object of processing in such quarries where blocks are extracted for sawing. Thus, all detritus not subject to primary processing in ornamental stone quarries is to be considered a derived natural aggregate, potentially usable in different applications depending on the grain size range chosen.

Quarry debris according to the present invention is derived from a process of extracting ornamental stone blocks in a quarry. This process is carried out without the use of explosives and is divided into several stages, including:
1- horizontal cut at the quarry face, i.e. that part of the quarry that is visible and ready to be quarried, for which the chain saw or recently the diamond wire saw is the protagonist, which makes precise cuts in the rock, like a very sharp knife; at this stage the generation of detritus is comprised in the range of 0-10 mm;
2- vertical cutting at the quarry face, using a diamond wire machine; then, inflatable metal discs are placed in the cavity that is created between the quarry face and the anchor that is about to break away; the end of an excavator's shovel is placed in the same cavity and, after inflating the metal discs and penetrating deeper into the end of the shovel, the bank is detached under their thrust; at this stage, too, the generation of debris is in the range of 0-10 mm;
3- the bank will fall on a previously prepared bed of debris, so that it does not fragment into many pieces; however, the detachment of the bank necessarily involves a lot of debris breakage, particularly on the layers; the generation of debris is mostly in the 10-100 mm range, in fact, the range with the largest dimensions is generated at this stage;
4- once the stand-alone bank is obtained, it is squared with the diamond wire machine or a toothed circular saw, in order to create a marketable block and eliminate any defects, so as to have a shape with the best dimensions useful for subsequent processing; the squaring operations generate debris in the 0-3 mm range.

As a result, the debris generated by the entire process of extracting ornamental stone blocks and its simple subsequent sieving, makes it possible to obtain an aggregate that can be recycled without further processing for use in the preparation of the low environmental impact concrete of the present invention.

According to a preferred aspect of the invention, the natural aggregates derived from the cutting materials come from the same quarry as the ornamental stone.

In the concrete of the present invention, there are no aggregates other than the natural aggregates derived from cutting materials (quarry debris), which come from the waste (or are by-products) of the processing of ornamental stone quarries, described above. The alkaline liquid that is used for the geopolymerisation reaction is either an alkaline silicate preferably of Na or K, or a blend between the two, or a silicate also of Na or K but resulting from variations to current processes in terms of reactions with secondary raw materials instead of virgin raw materials, which also aim to eliminate filtration processes, while maintaining identical chemical characteristics to traditionally manufactured products.

Generally, the ratio of the geopolymer binder to the natural aggregates derived from ornamental stone quarries varies between 5/95 and 35/65 by weight to the sum of the two constituents. Preferably this ratio is 20/80, but it could also be 15/85 or 25/75.

The geopolymer binder part is to be understood as consisting of the sum of the silicate (alkaline liquid) and the precursor (powder).

According to an aspect of the invention, as far as the formulation of the binder is concerned, and taking 1 kg of mixed binder into consideration, a liquid alkaline/precursor ratio of between 0.3 and 0.5, preferably 0.5, should be observed in order to obtain a high-performance binder suitable for formulating the concrete of the present invention. For example, taking 1 kg of mixed binder with an alkaline liquid/precursor ratio of 0.3, the following composition will be obtained:
- Precursor consisting of powders such as metakaolin, microsilica, F-type coal fly ash and steel mill recyclates in the amount of 0.769 kg;
- Alkaline liquid consisting of Na silicate in the amount of 0.231 kg.

Taking 1 kg of mixed binder with an alkaline liquid/precursor ratio of 0.5, the composition is as follows:
- Precursor consisting of powders such as metakaolin, microsilica, F-type coal fly ash and steel mill recyclates in the amount of 0.667 kg;
- Alkaline liquid consisting of Na silicate in the amount of 0.333 kg.

According to an aspect of the invention, a small percentage of water (1-2%) can be used to improve the rheology of the material during industrial production.

These and other objects of the present invention are achieved by means of a process incorporating the features of the appended claims, which form an integral part of the present description.

A second object of the present invention is the use of scraps (or by-products) from the processing of ornamental stone quarries as natural aggregates for preparing a concrete comprising a geopolymer binder, wherein more than 60% by weight of the aggregates (in relation to the total weight of the aggregates) have a diameter greater than 5 mm.

A third object of the invention is a process for preparing the concrete comprising a geopolymer binder and natural aggregates derived from ornamental stone quarries, in which more than 60% by weight of the aggregates (relative to the total weight of the aggregates) have a diameter of more than 5 mm.

It comprises the following steps:
a) Pouring the precursor powder including metakaolin, steel mill recyclates, F-type fly ash or microsilica into a container;
b) Adding the alkaline liquid into the same container;
c) Mixing the amalgam obtained after adding the liquid from step b) in the container with the precursor from step a) for at least 5 minutes;
d) Adding the natural aggregates derived from cutting materials coming from ornamental stone quarries in the same container with the amalgam mixed in step c), and, if necessary 1-2% m/m water and/or aerating, gelling or water-retaining additives; and
e) Mixing the product obtained in step d) for at least 3 minutes.

The container mentioned in step a), as is known to a person skilled in the art, will depend on the size of the batch; for small batches, plastic containers can be used, while for industrial production, the container will be made of metal, preferably coated with a surface treatment. In addition, traditional concrete mixing plants can be used advantageously for industrial production, modifying only a few parts by simply coating them superficially or making minor mechanical modifications.

All the process steps are carried out at a temperature comprised between 20 and 25 °C, preferably at 20°C.

The mixing time is a characteristic that a person skilled in the art can assess without difficulty. Generally, the mixing time increases as the amount of mixture involved increases. In the case of an industrial plant, this can vary from 5 to 20 minutes, preferably 15 minutes. Of course, the type of composition of the geopolymer binder is an important factor in assessing the mixing time. A person skilled in the art can easily estimate the time required for proper mixing.

Mixing with the alkaline liquid is preferably carried out in a continuous manner using a whip drill (for small batches) or with steel, preferably coated (industrial) whips or mixing paddles.

At the same time as introducing the aggregates in step c), a water content of up to 10%, preferably between 1-2% by weight of the total, can be added in order to improve the rheology of the innovative concrete. Aerating, gelling or water-retentive additives can also be added in the amount of 0.001 - 0.1 % m/m, preferably 0.1 % m/m.

The innovative concrete of the invention may also possess, in the fresh state during the geopolymerisation reaction, particular rheological characteristics, for example due to the addition of suitable additives such as aerating or gelling agents; while in the solid geopolymerised state, particular mechanical and/or insulating characteristics, for example due to the addition of suitable fillers such as minerals, short polymeric, natural or inorganic fibres, expanded glass, expanded clay.

A third object of the present invention is a kit for the preparation of the concrete according to the present invention, comprising a) a powdered precursor including metakaolin, steel mill recyclates, F-type fly ash or microsilica, b) an alkaline liquid, and c) natural aggregates derived from cutting materials coming from ornamental stone quarries, wherein each of the components a), b) and c) is packaged separately.

### DETAILED DESCRIPTION OF THE INVENTION

According to a first aspect, the present invention relates to a concrete comprising a geopolymer binder and natural aggregates derived from ornamental stone quarries.

The aggregate particle size is determined by weighing the different fractions retained by the sieves according to UNI and/or ASTM C 125, ASTM C 136 and ASTM C 117.

Natural aggregates derived from cutting materials coming from ornamental stone quarries typically have the grain size shown in Table 1 below.

**Table 1 - Grain size of natural aggregates derived from cutting materials coming from ornamental stone quarries**

| **Sieve Mesh Size (mm)** | **Through (%)** |
|---|---|
| 100 | 100 |
| 80 | 92 |
| 63 | 74 |
| 45 | 50 |
| 31.5 | 43 |
| 22.4 | 37 |
| 16 | 32 |
| 10 | 24 |
| 5 | 16 |
| 2 | 12 |
| 1 | 11 |
| 0.4 | 9 |
| 0.075 | 5 |

According to a preferred aspect, the concrete of the invention uses natural aggregates derived from cutting materials coming from ornamental stone quarries with grains that pass 100% through sieves with a mesh size of 0 to 32 mm, optionally 0 to 20 mm.

According to this preferred aspect, natural aggregates derived from cutting materials coming from ornamental stone quarries typically have the grain size shown in Table 2 below.

**Table 2 - Grain size of natural aggregates derived from cutting materials coming from preferred ornamental stone quarries**

| **Sieve Mesh Size (mm)** | **Through (%)** |
|---|---|
| 31.5 | 100 |
| 22.4 | 86 |
| 16 | 74.4 |
| 10 | 55.8 |
| 5 | 37.2 |
| 2 | 27.9 |
| 1 | 25.6 |
| 0.4 | 20.9 |
| 0.075 | 11.6 |

Thus, according to the present invention, more than 60% by weight of the aggregates (with respect to the total weight of the aggregates) used in the preparation of concrete has a diameter greater than 5 mm.

According to a further aspect of the invention more than 40% by weight of the aggregates (with respect to the total weight of the aggregates) used in the preparation of concrete has a diameter greater than 10 mm.

The particle size data reported above were obtained on the basis of standard UNI EN 933-1, which specifies how to carry out a particle size analysis by sieving. The instrument with which the test was carried out was a Eurobil-Radwag WLC 20/A2 balance and a MATEST electronic vibro-sifter with vibration timer.

The concrete of the present invention has been tested in different ways using cubes of 150 mm side, as per UNI EN 206, in particular tested in accordance with UNI EN 12390-3, with curing taking place within a controlled climate with temperature and humidity as per UNI EN 12390-2. At the same time, prisms with a square section of 100 mm and a height of 350 mm were tested according to UNI EN 12390-5.

Data obtained as a result of tests on cubes and prisms, cured both in air and in water after the moisture saturation period prescribed by EN 12390-2, to which compressive and bending stresses were applied by means of automatic MATEST concrete testing presses (maximum load in compression 2,000 kN and in bending 150 kN), have shown that the concrete of the present invention constitutes a construction material with a low environmental impact, currently designed and developed to emit up to 80% less CO₂ than standard concrete, but potentially further improved to achieve carbon neutrality, and endowed, with the same exposure class and consistency, with a compressive strength equal to that of traditional concrete, but more resistant to sulphates and fire.

As a traditional concrete, it was chosen to use one characterised by consistency class S3 and exposure class XC3, as it is frequently used on construction sites and with a mix design, considering the sum of water and cement to be approximately 20% of the total, similar to that of the concrete subject of the invention.

The low environmental impact of the innovative concrete according to the invention is possible due to the prevalent use of industrial by-products as precursors, the low-energy binder production method, and the use of aggregates already available at the appropriate grain size as waste from non-production processes.

In fact, the raw materials making up the precursor come from by-products of industrial production. These by definition do not contribute to greenhouse gas emissions when used for the production of geopolymer binders, except for their transport from the generation site to the geopolymer binder precursor production site. Once the secondary raw materials have been identified, analysed and crushed (if necessary), they are used as they are, i.e. without any high-temperature steps to change their chemical composition. This results in a considerable reduction in greenhouse gas emissions, as the basic constituent of cement, the clinker, instead needs to pass through high temperatures, around 1,450 °C, for a certain period of time. In fact, the concrete of the invention has a fast mixing cycle of the secondary raw materials by means of a simple powder mixer, which is much less energy-intensive than the clinker production process. Finally, the aggregate does not come from a production process with blasting in natural aggregate quarries, then crushed and processed or through its extraction from river beds, then dried and processed, but rather it turns out to be a derivative of the cutting materials of ornamental stone quarries that does not require any further processing, other than a separation of the appropriate grain size curve through mechanical screens, thus eliminating the part of greenhouse gas emissions related to all the processes previously described regarding traditional aggregates.

The alkaline liquid is the only component of the geopolymer binder that needs to be produced at controlled temperature and pressure, which is why it is the largest emitter in the overall balance of greenhouse gas emissions from all binder constituents. However, its emissions, apart from not being comparable to those generated during the production of clinker, are already decreasing considerably, thanks to the use of processes that are not only more efficient, but also geared towards the re-use of industrial by-products. The prospect of current studies would make it possible to reduce emissions related to it almost completely, so as to come as close as possible to the emission neutrality of the innovative concrete according to the invention.

It is worth mentioning that the previous analysis was carried out without considering the carbonation of the geopolymer binder, which would naturally sequester a small percentage of CO₂ in the long run.

While the invention is susceptible to various alternative modifications and constructions, some preferred embodiments will be described in detail below. It must in any case be understood that there is no intention to limit the invention to the specific embodiment illustrated, but, on the contrary, the invention intends to cover all the modifications and alternative constructions which fall within the scope of the invention as defined in the claims.

The use of "for example", "etc.", "or" indicates non-exclusive alternatives without limitation, unless otherwise indicated. The use of "includes" means "includes, but not limited to" unless otherwise indicated.

The invention is described below by means of experimental examples, which are not to be considered limiting for the purpose of the invention.

### EXAMPLES

### Example 1 - Preparation of the concrete according to the invention

The concrete was prepared comprising a geopolymer binder and natural aggregates derived from cutting materials from Carrara marble quarries with granules passing 100% through sieves with a mesh size of 0 to 20 mm, preferably divided into two grain size fractions, i.e. between 0 and 10 mm and between 10 and 20 mm, then used to the extent of 53% m/m of the total concrete for the range between 0 and 10 mm and 27% m/m of the total concrete for the range between 10 and 20 mm.

The percentage of geopolymer binder used is 20% m/m, while that of aggregate is 80% m/m, and no additives were used in this composition, but only 1-2% water to improve the rheology of the mix.

Taking into consideration 1 kg of the concrete according to the invention, the precursor consisting of powders such as metakaolin, microsilica and steel mill recyclates in the amount of 0.133 kg was first poured into a 14 1 plastic container, and then the alkaline liquid consisting of Na silicate in the amount of 0.067 kg was poured into the same container. This was then mixed with suitable stirrers, such as single or double spiral whisk agitators, for a time comprised between 5 and 10 minutes.

The aggregates, i.e. by-products of cutting materials from the Carrara marble quarry, were then added to the binder thus constituted, so that both the fine and coarse parts were within a grain size curve of between 0 and 20 mm, together with a percentage of water varying between 1 and 2% with respect to the desired rheology, and then the concrete was mixed for about 3 minutes, at the end of which it was ready to be used in the production of structural products.

The concrete thus produced was tested through the use of cubes with a cross-section of 150 mm, prisms with a square cross-section of 100 mm and a height of 350 mm, and the Abrams cone, which are systems commonly used within R&D laboratories in the construction industry.

The data were obtained as a result of tests on cubes and prisms, cured both in air and in water, to which compression and bending stresses were applied by means of the automatic MATEST presses described above. In addition, the density was measured at 24 hours and 28 days, according to the requirements of EN 12390-7.

The data produced by the tests are shown in Table 3 below.

**Table 3 - Mechanical properties of the concrete of the invention**

| **Time** | **Bending** | **Compression** | **Density** |
|---|---|---|---|
| 24 hours | 2.2 MPa | 9.8 MPa | 2,400 kg/m³ |
| 7 days | -- | 33.3 MPa | -- |
| 28 days | (air) 5.1 MPa | (air) 40.7 MPa | -- |
| 28 days | (water) 4.8 MPa | (water) 38.4 MPa | 2,320 kg/m³ |
| 56 days | -- | (air) 44.6 MPa | -- |

Using an Abrams cone, the consistency class of the concrete was measured, which is S3 with the introduction of 1% water to vary its rheology (tests were performed with consistency class S3 to conform to the comparative test below).

It was found that during the bending fracture of the prisms, in addition to having broken into two parts as usual, it was possible to note how the concrete of the invention split into two parts each belonging to the two ends of the prism after the bending fracture has no visible aggregate protrusions in their entirety, but they too were broken in half. This observation seems to confirm the hypothesis on the morphology of shear derivatives used as aggregates, which are not to be considered simply as aggregates similar to concrete aggregates but are incorporated into the geopolymer matrix by reacting with it.

As a comparative test, a concrete with mechanical strength class C 30/37 and consistency class S3 was analysed, of which the same tests were carried out (at the same time intervals) as for the innovative concrete in compression, as these were sufficient to classify the material.

Standard concrete has the following composition:
- CEM II 42.5 = 320 kg/m³;
- Water = 158 l/m³;
- Sand 0/2 mm = 95 kg/m³;
- Sand 0/4 mm = 810 kg/m³;
- Grit 6/10 mm = 480 kg/m³; and
- Gravel 12/18 mm = 495 kg/m³.

This composition is characterised by the presence of aggregates with a maximum diameter of 20 mm, a water/cement ratio of 0.49 and a density of 2,400 kg/m³.

The results on the mechanical strengths of such **standard concrete taken as a comparison** are shown in Table 4 below.

**Table 4 - Mechanical properties of a standard concrete with strength class C 30/37 and consistency class S3**

| **Time** | **Bending** | **Compression** | **Density** |
|---|---|---|---|
| 24 hours | -- | 10 MPa | 2,400 kg/m³ |
| 7 days | -- | 32 MPa | -- |
| 28 days | -- | 41 MPa | -- |

The data obtained showed that the concrete of the present invention constitutes a low environmental impact construction material and can be endowed with a compressive strength equal to that of concrete with mechanical strength class C 30/37.

Two other concrete formulations were also prepared, highlighting the versatility of innovative concrete in replicating the extremes of mechanical strength classes for different applications in construction, particularly those pertaining to ordinary concrete. While the formulation in Example 1 is in a medium mechanical strength class, Example 2 is in a low mechanical strength class; on the other hand, Example 3 is in a high mechanical strength class.

### Example 2 - Preparation of the concrete according to the invention

The concrete was prepared comprising a geopolymer binder and natural aggregates derived from cutting materials from Carrara marble quarries with granules passing 100% through sieves with a mesh size of 0 to 20 mm, divided into two grain size fractions, i.e. between 0 and 10 mm and between 10 and 20 mm, then used to the extent of 45% m/m of the total concrete for the range between 0 and 10 mm and 40% m/m of the total concrete for the range between 10 and 20 mm.

The percentage of geopolymer binder used is 15% m/m, while that of aggregate is 85% m/m, and no additives were used in this composition, but only 1-2% water to improve the rheology of the mix.

Taking into consideration 1 kg of the concrete according to the invention, the precursor consisting of powders such as metakaolin, microsilica and steel mill recyclates in the amount of 0.100 kg was first poured into a 14 1 plastic container, and then the alkaline liquid consisting of Na silicate in the amount of 0.050 kg was poured into the same container. This was then mixed with suitable stirrers, such as single or double spiral whisk agitators, for a time comprised between 5 and 10 minutes.

The aggregates, i.e. by-products of cutting materials from the Carrara marble quarry, were then added to the binder thus constituted, so that both the fine and coarse parts were within a grain size curve of between 0 and 20 mm, together with a percentage of water varying between 1 and 2% with respect to the desired rheology, and then the concrete was mixed for about 3 minutes, at the end of which it was ready to be used in the production of structural products.

The concrete thus produced was tested through the use of cubes with a cross-section of 150 mm, prisms with a square cross-section of 100 mm and a height of 350 mm, and the Abrams cone, which are systems commonly used within R&D laboratories in the construction industry.

The data were obtained as a result of tests on cubes and prisms, cured both in air and in water, to which compression and bending stresses were applied by means of the automatic MATEST presses described on page 11. In addition, the density was measured at 24 hours and 28 days, according to the requirements of EN 12390-7.

The data produced by the tests are shown in Table 5 below.

**Table 5 - Mechanical properties of the concrete of the invention**

| **Time** | **Bending** | **Compression** | **Density** |
|---|---|---|---|
| 24 hours | 1 MPa | 5 MPa | 2,500 kg/m³ |
| 7 days | -- | 16.7 MPa | -- |
| 28 days | (air) 4.2 MPa | (air) 20.3 MPa | -- |
| 28 days | (water) 3.8 MPa | (water) 17.6 MPa | 2,480 kg/m³ |
| 56 days | -- | (air) 22.1 MPa | -- |

Using an Abrams cone, the consistency class of the concrete was measured, which is S3 with the introduction of 2% water to vary its rheology (tests were performed with consistency class S3 to conform to the comparative test below).

As a comparative test, a concrete with mechanical strength class C 12/15 and consistency class S3 was analysed, of which the same tests were carried out (at the same time intervals) as for the innovative concrete in compression, as these were sufficient to classify the material.

The concrete in question does not have a standardised prescription, so in order to minimise the arbitrariness of the composition, it was decided to use a bagged aggregate mix with a grain size comprised between 0 and 20 mm and a percentage of cement and water to achieve the desired properties. In this case, rather than a mix design in relation to a m³ of material produced, a percentage was worked out on the mass to be tested in the laboratory:
- CEM II/A-LL 32.5 R = 15% m/m;
- w / c ratio > 0.7;
- Mixed 0/20 mm = 85% m/m.

This composition is characterised by the presence of aggregates with a maximum diameter of 20 mm, a water/cement ratio greater than 0.7 and a density of 2,500 kg/m³.

The results on the mechanical strengths of such standard concrete taken as a comparison are shown in Table 6 below.

**Table 6 - Mechanical properties of a standard concrete with strength class C 12/15 and consistency class S3**

| **Time** | **Bending** | **Compression** | **Density** |
|---|---|---|---|
| 24 hours | -- | 7 MPa | 2,500 kg/m3 |
| 7 days | -- | 12.2 MPa | -- |
| 28 days | -- | 18.3 MPa | -- |

The data obtained showed that the concrete of the present invention constitutes a low environmental impact construction material and can be endowed with a compressive strength equal to that of concrete with mechanical strength class C 12/15.

### Example 3 - Preparation of the concrete according to the invention

The concrete was prepared comprising a geopolymer binder and natural aggregates derived from cutting materials from Carrara marble quarries with granules passing 100% through sieves with a mesh size of 0 to 20 mm, divided into two grain size fractions, i.e. between 0 and 10 mm and between 10 and 20 mm, then used to the extent of 50% m/m of the total concrete for the range between 0 and 10 mm and 25% m/m of cement of the total concrete for the range between 10 and 20 mm.

The percentage of geopolymer binder used is 25% m/m, while that of aggregate is 75% m/m, and no additives were used in this composition, but only 1-2% water to improve the rheology of the mix.

Taking into consideration 1 kg of the concrete according to the invention, the precursor consisting of powders such as metakaolin, microsilica and steel mill recyclates in the amount of 0.167 kg was first poured into a 14 1 plastic container, and then the alkaline liquid consisting of Na silicate in the amount of 0.083 kg was poured into the same container. This was then mixed with suitable stirrers, such as single or double spiral whisk agitators, for a time comprised between 5 and 10 minutes.

The aggregates, i.e. by-products of cutting materials from the Carrara marble quarry, were then added to the binder thus constituted, so that both the fine and coarse parts were within a grain size curve of between 0 and 20 mm, together with a percentage of water varying between 1 and 2% with respect to the desired rheology, and then the concrete was mixed for about 3 minutes, at the end of which it was ready to be used in the production of structural products.

The concrete thus produced was tested through the use of cubes with a cross-section of 150 mm, prisms with a square cross-section of 100 mm and a height of 350 mm, and the Abrams cone, which are systems commonly used within R&D laboratories in the construction industry.

The data were obtained as a result of tests on cubes and prisms, cured both in air and in water, to which compression and bending stresses were applied by means of the automatic MATEST presses previously described on page 11. In addition, the density was measured at 24 hours and 28 days, according to the requirements of EN 12390-7.

The data produced by the tests are shown in Table 7 below.

**Table 7 - Mechanical properties of the concrete of the invention**

| **Time** | **Bending** | **Compression** | **Density** |
|---|---|---|---|
| 24 hours | 2.8 MPa | 20.3 MPa | 2,400 kg/m³ |
| 7 days | -- | 39.2 MPa | -- |
| 28 days | (air) 6.1 MPa | (air) 53.6 MPa | -- |
| 28 days | (water) 5.8 MPa | (water) 50.3 MPa | 2,400 kg/m³ |
| 56 days | -- | (air) 57.8 MPa | -- |

Using an Abrams cone, the consistency class of the concrete was measured, which is S3 with the introduction of 1% water to vary its rheology (tests were performed with consistency class S3 to conform to the comparative test below).

As a comparative test, a concrete with mechanical strength class C 40/50 and consistency class S3 was analysed, of which the same tests were carried out (at the same time intervals) as for the innovative concrete in compression, as these were sufficient to classify the material.

Standard concrete has the following composition:
- CEM II 42.5 = 430 kg/m³;
- Water = 170 l/m³;
- Sand 0/2 mm = 20 kg/m³;
- Sand 0/4 mm = 723 kg/m³;
- Grit 6/10 mm = 725 kg/m³; and
- Gravel 12/18 mm = 480 kg/m³.

This composition is characterised by the presence of aggregates with a maximum diameter of 20 mm, a water/cement ratio of 0.38 and a density of 2,435 kg/m³.

The results on the mechanical strengths of such **standard concrete taken as a comparison** are shown in Table 8 below.

**Table 8 - Mechanical properties of a standard concrete with strength class C 40/50 and consistency class S3**

| **Time** | **Bending** | **Compression** | **Density** |
|---|---|---|---|
| 24 hours | -- | 20 MPa | 2,435 kg/m3 |
| 7 days | -- | 42 MPa | -- |
| 28 days | -- | 53 MPa | -- |

The data obtained showed that the concrete of the present invention constitutes a low environmental impact construction material and can be endowed with a compressive strength equal to that of concrete with mechanical strength class C 40/50.

### Acid resistance

Compared to traditional cementitious binders, geopolymeric binders have been proven to perform better in terms of both acid and temperature resistance. In fact, when comparing the concrete of the present invention with a standard cement-based concrete, it can be seen that following the immersion of specimens identical to those used previously in a 5 % sulphuric acid solution for 28 days, the geopolymer-based concrete does not undergo any significant weight alterations, but has fluctuations of a few percentage points around zero. Cement-based concrete, on the other hand, has a significant drop in weight of up to 50%.

### Fire resistance

Preliminary tests have shown that the geopolymer concrete according to the invention can reach 1,200°C without any structural problems or loss of mechanical properties, while examining a traditional concrete one shows that after a few minutes at temperatures around 600°C, it starts to have noticeable structural failures.

From these results, it can be deduced that the concrete according to the invention is not only comparable to a standard concrete in terms of mechanical performance, but is also superior with regard to fire and acid resistance.

## Claims

1. Concrete comprising a geopolymer binder and natural aggregates derived from cutting materials coming from ornamental stone quarries, wherein more than 60% by weight of the aggregates (with respect to the total weight of the aggregates) have a diameter greater than 5 mm.

2. Concrete according to claim 1, in which such natural aggregates have grains that pass 100% through sieves with mesh sizes from 0 to 32 mm, optionally from 0 to 20 mm.

3. Concrete according to claim 1, wherein the geopolymer binder and the natural aggregates derived from cutting materials coming from ornamental stone quarries are present in a ratio comprised between 5/95 and 35/65 by weight to the sum of the two constituents.

4. Concrete according to claim 1, wherein the geopolymer binder and the natural aggregates derived from the cutting materials from ornamental stone quarries are present in a weight ratio of 15/85 or 20/80 or 25/75.

5. Concrete according to claim 1, wherein the geopolymer binder comprises an amorphous silica aluminous reactive powder (precursor) and an alkaline liquid.

6. Concrete according to claim 5, wherein the precursor comprises metakaolin, F-type coal fly ash, microsilica, steel mill recyclates and/or mixtures thereof.

7. Concrete according to claim 5, wherein the alkaline liquid is an alkaline silicate, preferably of Na or K or mixtures thereof.

8. Process for preparing a concrete comprising a geopolymer binder and natural aggregates derived from cutting materials coming from ornamental stone quarries, wherein more than 60% by weight of the aggregates (with respect to the total weight of the aggregates) have a diameter greater than 5 mm, comprising the following steps:
a) Pouring a precursor powder into a container, the precursor comprising an amorphous silica aluminous reactive powder;
b) Adding an alkaline liquid into the same container;
c) Mixing for a time comprised between 5 and 20 minutes, preferably 15 minutes;
d) Adding natural aggregates derived from cutting materials coming from ornamental stone quarries, and, if necessary, water and/or additives; and
e) Mixing for about 5 minutes.

9. Process according to claim 8, which is carried out at a temperature comprised between 20 and 25°C, preferably at 20°C.

10. Kit for the preparation of the concrete according to claim 1, comprising (a) a powdered precursor including metakaolin, steel mill recyclates, F-type fly ash or microsilica, (b) an alkaline liquid, and (c) natural aggregates derived from cutting materials coming from ornamental stone quarries, wherein each of the components (a), (b) and (c) is packaged separately.

11. Use of by-products from the processing of ornamental stone quarries as natural aggregates for preparing a concrete comprising a geopolymer binder, wherein more than 60% by weight of the aggregates (in relation to the total weight of the aggregates) have a diameter greater than 5 mm.
